# EUROPEAN PATENT APPLICATION

(11) **EP 1 734 596 A1**
(43) Date of publication of application: **20.12.2006**
(21) Application number: 05720352.3
(22) Date of filing: 09.03.2005
(51) Int. Cl.: H01M 2/02

(54) **FILM ENCLOSED ELECTRIC DEVICE AND COLLECTOR COVERING MEMBER FOR THE FILM ENCLOSED ELECTRIC DEVICE**

(30) Priority: 09.03.2004 JP 2004066403
(71) Applicant: NEC Lamilion Energy, Ltd., Sagamihara-shi Kanagawa 229-1198 (JP)
(72) Inventor: MIZUTA, Masatomo, NEC Lamilion Energy, Ltd., Sagamihara-shi, Kanagawa 229-1198 (JP)
(74) Representative: Wenzel & Kalkoff
(86) International application number: PCT/JP2005/004080
(87) International publication number: WO 2005/086258

(57) **Abstract**

Corners 3a', 3b' of anode collector 3a and cathode collector 3b are covered with collector protection member 10. Collector protection member 10a is a member in the form of a bag of a resin-made film, and is formed at front surface 10c thereof with insertion hole 10d for allowing anode tab 4a and anode collector 3a or cathode tab 4b and cathode collector 3b to be inserted thereinto. Collector protection member 10 is vacuumed when battery element 2 is sealed with laminate films 5, 6, thereby ensuring tight contact of collector protection member 10 with anode collector 3a and cathode collector 3b.

## Description

### Technical Field

The present invention relates to a film-covered electric device in which an electric device element, as typified by a battery and a capacitor, is stored in an enclosing film. In particular, the invention relates to a collector-covering - member for covering a collector of the film-covered electric device.

### Background Art

In recent years, a battery as a power source for a mobile telephone or the like strongly requires weight and thickness reduction. So, in regard to the material for enclosing the battery, instead of using a metallic can described in the related art in which there is a limit to weight and thickness reduction, a thin metal film or a laminate film, formed by laminating a thin metal film, and heat-seal resin film, have been used as enclosing material whose thickness and weight can be further reduced and whose shape is freely flexible compared with a metallic can. So, in regard to the enclosing material for the battery, instead of the metallic can of the related art having a ceiling in weight and thickness reduction, a metal thin film or a laminate film formed by laminating a metal thin film and a heat-seal resin film has been used as an enclosing material that can be further reduced in weight and in thickness and that can be in a form freely in comparison with the metallic can.

As a representative example of the laminate film used as the enclosing material, there is a three-layer laminate film formed by laminating a heat-seal resin film, which is a heat-sealing layer, on one side of a thin aluminum film, which is a thin metal film, and by laminating a protection film on the other side.

The film-covered battery that uses a laminate film as covering material covers an electric element by laminate films, so that the heat-seal resin films are opposite each other and the laminate films are heat-sealed around the electric element to airtightly seal (hereinafter, "seal" is simply used) the electric element. The electric element is formed by laminating an anode and a cathode through a separator. The anode and the cathode are respectively provided with tabs used to draw the anode and the cathode of the electric element to the outside. Also, a porous film formed by using thermoplastic resin, such as polyolefin, is used as a separator.

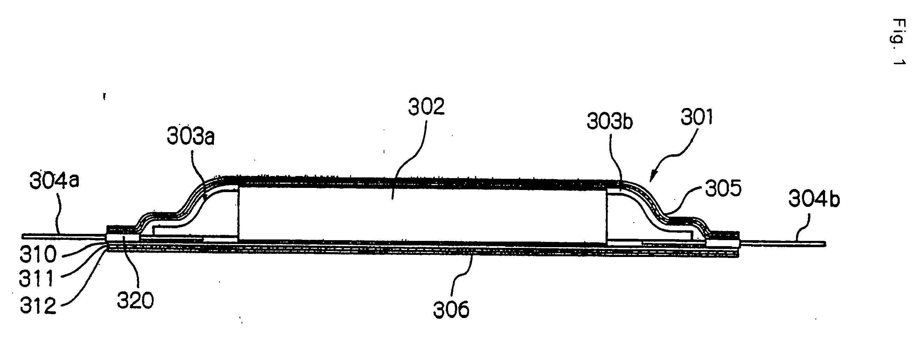

Figure 1 shows a cross-sectional side view of an electric element as an example of a film-covered battery of related art.

Film-covered battery 301 has battery element 302, anode collector 303a and cathode collector 303b arranged in battery element 302, an enclosing film that stores battery element 302 together with an electrolytic solution, anode tab 304a that is connected to anode collector 303a, and cathode tab 304b that is connected to cathode collector 303b.

Battery element 302 is formed by alternately laminating a plurality of anode plates and a plurality of cathode plates through separators. Each anode plate is formed by coating anode material on aluminum foil, and the cathode is formed by coating cathode material on copper foil. Each uncoated portion is extended from a lamination area to form an extension. No electrode material is applied to the extension. The extensions of the anode plates and the extensions of the cathode plates are each ultrasonic-welded by one operation to form anode collector 303a and cathode collector 303b, which are relay portions. Anode collector 303a and anode tab 304a and cathode collector 303b and cathode tab 304b are each connected at the same time by ultrasonic-welding. Anode tab 304a and cathode tab 304b are manufactured by punching an aluminum plate and a copper plate.

The enclosing film includes two laminate films 305, 306 that hold and enclose battery element 302 in the thickness direction thereof. Each of laminate films 305, 306 is formed by laminating PP (polypropylene) layer 310, aluminum layer 311, and nylon layer 312. Peripheries of laminate films 305, 306 are heat-sealed in a manner that PP layer 310 becomes an inner layer of the battery, whereby laminate films 305, 306 seal battery element 302.

In the film-covered battery, like this arrangement, sharp-pointed corners of anode collector 303a and cathode collector 304a abut against PP layers 310, which are the inner layers of laminate films 305, 306 by oscillation or the like, to cause damage, those portions become thinner, and the insulation property is lowered in some cases. According to the known phenomenon and principal that lightning will strike a rod installed in a flat field, there is the highest possibility that aluminum layer 311 under PP layer 310 and the sharp pointed corners of anode collector 303a and cathode collector 304 will be electrically shorted.

To deal with such a problem, there is disclosed the insulation frame-like spacer of the triangle cross section in which each junction portion of the terminals of the anode and the cathode and the leads of the anode and the cathode is stored inside, and an insertion hole for allowing each lead to be inserted is formed (for example, FIGs. 28 to 30, WO 2000/59063). The insulation frame-like spacer stores the collectors of the terminals of the anode and the cathode, which are arranged in a triangle, and the end surface of the electrode-group (lamination electrode) is held by the reinforcing portion of the insulation frame-like spacer, thereby fixing the electrode group. Such an arrangement prevents the leads from being cut, enclosed films from being broken, and prevents the occurrence of an electric short circuit between the enclosing film and the electrode group.

### Disclosure of Invention

### Problems to be Solved by the Invention

In the above-mentioned example of related art, the insulation frame-like spacer abuts against the end surface of the electrode group by the reinforcing portion thereof to fix the electrode group. Therefore, a member possessing a certain level of stiffness is used as the insulation frame-like spacer so as not to be deformed itself. Also, since there is a possibility that the lead receives a force from the outside, abuts against the insertion hole, and is deformed, the insulation frame-like spacer is arranged to provide a certain amount of space of a certain level between the insertion hole and the lead. Specifically, the insertion hole is formed to be larger than the size of the lead, and therefore a large amount of electrolytic solution enters the insulation frame-like spacer. Also, since the corner of the collector is covered with the insulation frame-like spacer, there is no case in which the enclosing film will be damaged by the corner of the collector, however, since the insulation frame-like spacer is a stiff member, there is a possibility that the insulation frame-like spacer itself will cause damage to the enclosing film, and the electrical insulation property is lowered.

When the insulation frame-like spacer causes damage to the enclosing film and the electrical insulation property is lowered, there is a possibility that a short circuit will occur between the damaged portion and the corner of the collector. Since the corner of the collector is covered with the insulation frame-like spacer, the current path between the damaged portion and the corner is not the shortest path, however, in the above-mentioned example of related art, since a large amount of electrolytic solution enters the insulation frame-like spacer, the electrical insulation property is not good between the damaged portion and the corner.

In order to improve the electrical insulation property, the insulation frame-like spacer preferably surrounds the corner so that a space is minimized between the insulation frame-like spacer and the corner of the collector to reduce the inflow of the electrolytic solution into the insulation frame-like spacer. However, in such an arrangement using the member having a certain level of stiffness, there is a possibility that the lead or the like will be damaged during fabrication and that the lead abuts against the insertion hole and will be deformed when the lead receives force from the outside, as described above.

Also, though the insulation frame-like spacer is made of resin, a problem of an increase in weight arises because stiffness must be ensured.

Further, it can be considered that an insulative adhesion tape is applied to the corner in order to prevent the enclosing film from being damaged by the corner of the collector and to prevent an electric short circuit. However, in this case, considerations must be given to the resistance of the adhesive of the adhesion tape to the electrolytic solution, and there is also a possibility that the desired effect cannot be obtained depending on the way that the tape is applied in battery production.

In view of the above problems in the related art, the present invention has as an object to provide a film covered battery and a member for covering the collector for the film covered battery that can improve the insulation property between the collector and the enclosing film while suppressing an increase in weight.

### Means for Solving the Problems

To attain the above-mentioned object, a film covered electric device of the present invention includes an electric device element having a collector formed by collectively joining each anode plate or each cathode plate that is extended from a lamination area in which a plurality of anode plates and a plurality of cathode plates are opposite each other and laminated, and an enclosing film in which at least a heat-seal resin layer and a metal layer are laminated, a battery element is surrounded so that said heat-seal resin layer is arranged inside, a peripheral junction portion is heat-sealed to seal the battery element, comprising:
a member in the form of a bag for tightly covering at least a corner of said collector.

As described above, in the film-covered electric device according to the present invention, the corner of the collector is covered with the member in the form of a bag, thereby preventing damage in the enclosed film by the corner. Also, even if the corner causes damage to the enclosing film, the corner is tightly covered with the member in the form of a bag, thus, the current path between the corner and the damaged portion becomes longer, and a state can be kept in which it is hard for an electric short circuit to occur. Specifically, when no member in the form of a bag is arranged, the corner and the damaged portion form the shortest current path which creates
a state in which an electric short circuit is easy to occur, however, the corner is covered with the member in the form of a bag, whereby the current path between the corner and the damaged portion cannot be formed without passing through the opening portion in the member in the form of a bag. Therefore, there is no case in which the shortest current path will be formed. Also, the member in the form of a bag tightly covers the collector, thereby reducing the inflow of the electrolytic solution between the member in the form of a bag and the collector. Therefore, electric resistance between the corner and the damaged portion is enhanced. Based on this arrangement, the film-covered electric device according to the present invention can improve the electrical insulation property between the collector and the enclosed film.

The film-covered electric device according to the present invention may include a tab that is connected to the collector and extends from the enclosing film, and the member in the form of a bag may be formed with an opening portion for allowing the tab to be inserted thereinto.

Also, in the film-covered electric device according to the present invention, the member in the form of a bag may be a resin-made film. The member in the form of a bag is a film, not a rigid resin case having high stiffness, thereby reducing weight and improving the close strong contact with the collector.

Also, the member in the form of a bag may be formed by adhering two films together, or may be made of an inflation film.

A collector-covering member for a film-covered electric device includes an electric device element having a collector formed by collectively joining each anode plate or each cathode plate that is extended from a lamination area in which a plurality of anode plates and a plurality of cathode plates are opposite to each other and laminated, and an enclosing film in which at least a heat-sealing resin layer and a metal layer are laminated, a battery element is surrounded so that the heat-sealing resin layer is arranged inside, and a peripheral junction portion is heat-sealed to seal the battery element, the collector covering member is a member in the form of a bag for tightly covering at least a corner of the collector.

Also, the collector-covering member according to the present invention may be formed with an opening portion to allow a tab that is connected to the collector and that is extended from the enclosing film, to be inserted thereinto.

Also, the collector-covering member according to the present invention may be a resin-made film, and may be formed by adhering two films together or made of an inflation film, in this case.

According to the present invention, the electrical insulation property can be improved between the collector and the enclosing film, while the increase in weight is suppressed.

### Brief Description of the Drawings

FIG. 1 is a cross-sectional side view of a battery element of an example of a film-covered battery of related art.
FIG. 2 is an exploded perspective view of a film-covered battery according to an embodiment of the present invention.
FIG. 3 is a perspective appearance view of a collector protection member according to a first embodiment of the present invention.
FIG. 4 is a partial enlarged perspective view of the vicinity of the anode tab and the anode collector of the collector protection member and the film covered battery.
FIG. 5 is a view showing an outline of a step of attaching the collector protection member to the anode collector and the cathode collector.
FIG. 6 is a view showing a step of attaching a laminate film to the battery element, in which the collector protection members are attached to the anode collector and the cathode collector.
FIG. 7a is a schematic plan view of the vicinity of the anode collector to which the collector protection member is attached.
FIG. 7b is a cross-sectional side view taken along line A-A in Fig. 7a.
FIG. 7c is a cross-sectional side view taken along line B-B in Fig. 7a.
FIG. 8 is a view for explaining a current path from a broken part to a corner when the laminate film is broken.
FIG. 9 is a perspective appearance view of a collector protection member according to a second embodiment of the present invention.
FIG. 10 is a perspective appearance view of a collector protection member according to a third embodiment of the present invention.

### Best Mode for Carrying Out the Invention

### (First Embodiment)

Next, examinations are given of embodiments of the present invention.

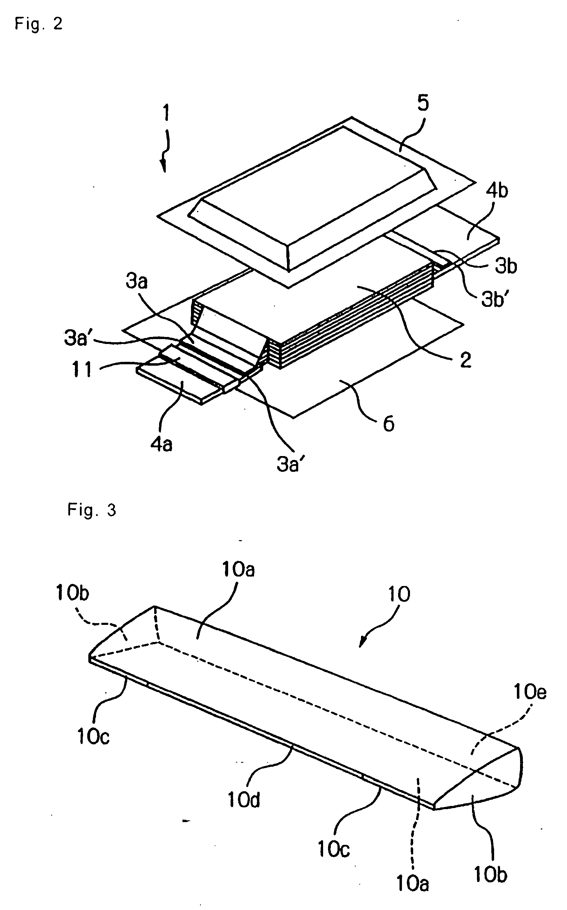

Figure 2 shows an exploded perspective view of a film-covered battery. Incidentally, FIG. 2 shows the film-covered battery in which the collector protection member according to the first embodiment is removed.

Film-covered battery 1 has battery element 2, anode collector 3a and cathode collector 3b arranged for battery element 2, an enclosing member that stores battery element 2 together with an electrolytic solution and which includes two laminates 5, 6, anode tab 4a connected to anode collector 3a, and cathode tab 4b connected to cathode collector 3b.

Battery element 2 is formed by alternately laminating a plurality of anode plates and a plurality of cathode plates through separators.

Each anode plate is formed by coating an anode electrode on aluminum foil, and the cathode is formed by coating a cathode electrode on copper foil. In extensions that are extended from the lamination area and that are not coated with electrode materials, the extensions of the anode plates and the extensions of the cathode plates are each ultrasonic-welded by one operation to form anode collector 3a and cathode collector 3b, which are relay parts. Anode tab 4a is connected to anode collector 3a and cathode tab 4b is connected to cathode collector 3b at the same time by this ultrasonic welding.

The enclosing film includes two laminate films 5, 6 that hold and enclose battery element 2 in the thickness direction thereof. Each of laminate films 5, 6 is formed by laminating a heat-sealing resin layer having a heat-sealing property, a metal layer, and a protection layer. Heat-sealing parts 7 of laminate films 5, 6 are heat-sealed in a manner such that the heat-sealing resin layer made of PP (polypropylene) becomes an inner layer, whereby laminates films 5, 6 seal battery element 2.

As laminate films 5, 6, any film can be used in such a film-covered battery, as long as the film can seal battery element 2 so that the electrolytic solution does not leak, and a laminate film formed by laminating a metal thin film layer and a heat-sealing resin layer is generally used. As such a laminate film, a film formed by laminating a heat-sealing resin of 3µm to 200µm in thickness on metal foil of 10µm to 100µm in thickness may be used. As materials of the metal foil, i.e., the metal layer, Al, Ti, Ti alloy, Fe, stainless, and Mg alloys may be used. As the heat-seal resin, i.e., as the heat-seal resin layer, polypropylene, polyethylene, acid modification thereof, polyester, like polyphenylene sulfide, and polyethylene terephthalate, polyamide, ethylene vinyl acetate copolymer, may be used. Also, as the protection layer, nylon or the like is preferable.

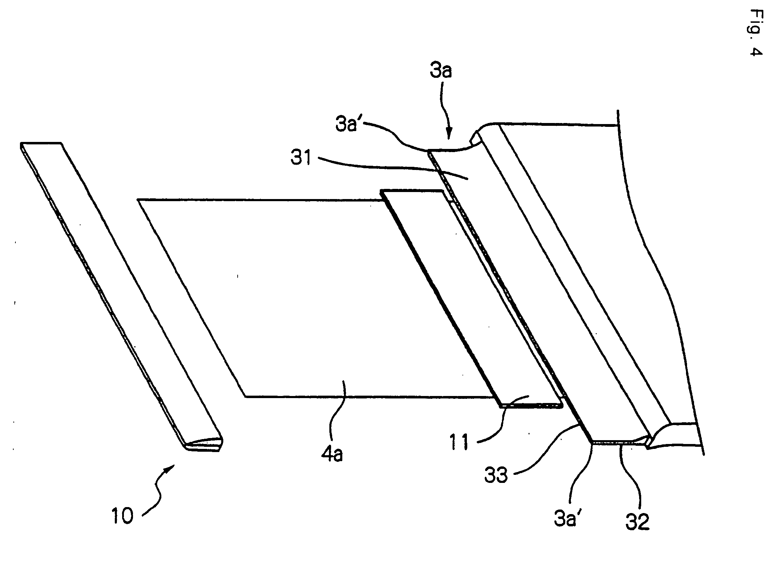

Figure 3 is a perspective appearance view of a collector protection member according to this embodiment, and FIG. 4 is a partial enlarged perspective view of the vicinity of the anode tab and the anode collector of the collector protection member and the film-covered battery.

Collector protection member 10 shown in FIG. 3 is a member in the form of a bag for covering anode collector 3a and cathode collector 3b, in particular, corners 3a', 3b'. Incidentally, since anode collector 3a is similar to cathode collector 3b in basic arrangement, the structure of collector protection member 10 is explained while anode collector 3a is taken as an example.

Collector protection member 10 mainly includes flat portion 10a for covering flat surface 31 of anode collector 3a, side portion 10b for covering side 32 of anode collector 3a, and front portion 10c for covering termination part 33 of anode collector 3a. The width of collector protection member 10 is broader than the width of anode collector 3a in order to cover each part of anode collector 3a, and is formed to be slightly broader than the width of anode collector 3a in order to reduce the inflow of the electrolytic solution between collector protection member 10 and anode collector 3a. In this embodiment, the width of anode collector 3a is 65.5 mm, and the width of collector protection member 10 is 66 mm.

Also, insertion hole 10d for allowing anode tab 4a and anode collector 3a to be inserted is formed in front portion 10c, and insertion hole 10e for allowing anode tab 4a, covering portion 11, and anode collector 3a to be inserted is formed in a surface opposite to insertion hole 10d.

The opening width of insertion hole 10d formed in front portion 10c is broader than the widest portion of anode tab 4a and covering portion 11, and, preferably, the opening width is set as larger front portions 10c remain at both sides as possible, because corner 3a' is covered. In the present embodiment, the width of covering portion 11 is 46 mm, while the opening width of insertion hole 10d is 46.5 mm. Specifically, when the width of collector protection member 10 is 66 mm, front portions 10c of about 9.75 mm are formed at both sides.

Also, preferably, front portion 10c is slightly higher than the thickness of termination portion 33 of anode collector 3a in order to cover corner 3a'. In this embodiment, the thickness of the termination portion of anode collector 3a is 0.15 to 0.3 mm, and tab 4a, that has covering portion 11 that has previously been formed, is joined to anode collector 3a. Therefore, in order to insert covering portion 11 during attachment, the height of front part 10c is preferably set to 0.3 to 0.4 mm so as to ensure that the thickness of covering part 11 is 0.2 to 0.3 mm. Incidentally, when covering part 11 is formed on tab 4a after attaching collector protection member 10 to anode collector 3a, the height of front portion 10c is preferably set to 0.2 to 0.4 mm.

In order to allow anode tab 4a, covering portion 11 and anode collector 3a to be inserted easily, the opening height of insertion hole 10e is formed to be higher than the thickest portion among these, *i.e.,* the thickness of anode collector 3a in this embodiment. Incidentally, preferably, the opening height is unnecessarily set to high in order to minimize the inflow of the electrolytic solution between collector protection member 10 and anode collector 3a. In this embodiment, the thickest portion of anode collector 3a is 2 to 8 mm, and the opening height is preferably set to 2.5 to 8.5 mm so as to meet this.

Incidentally, each above-mentioned size is an example at the anode side, the width of cathode collector 3b is 70 mm, that of collector protection member at the cathode side is 70.5 mm when the values at the anode side are used, and each size at the cathode side is defined similarly to the anode side with reference to those values.

Collector protection member 10 is 100µm in thickness and is made of PP (polypropylene). Therefore, collector protection member 10 is flexible, and even if a force is exerted on anode tab 4b from the outside and anode tab 4a abuts against collector protection member 10, there is no case in which the abutted portion will be locally bent. Incidentally, the material of collector protection member 10 is not limited to PP, and any material is available as long as it is non-erosive with the electrolytic solution and is flexible.

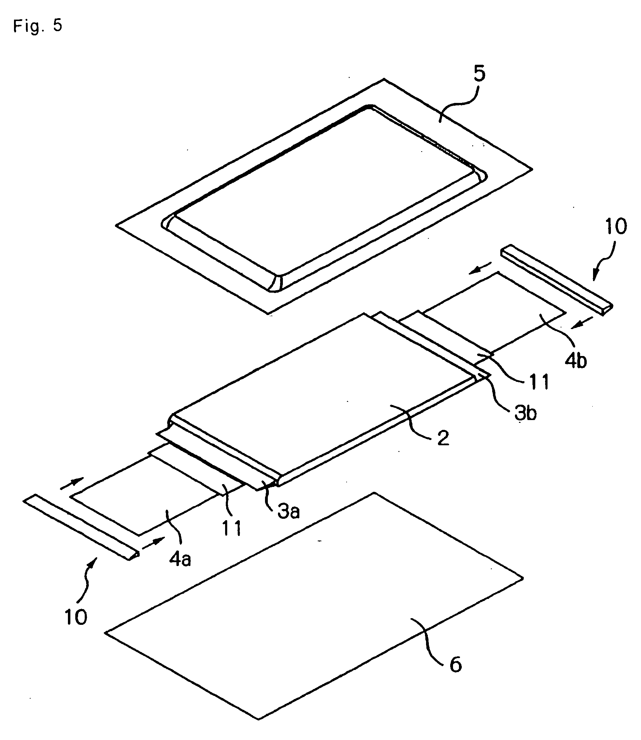

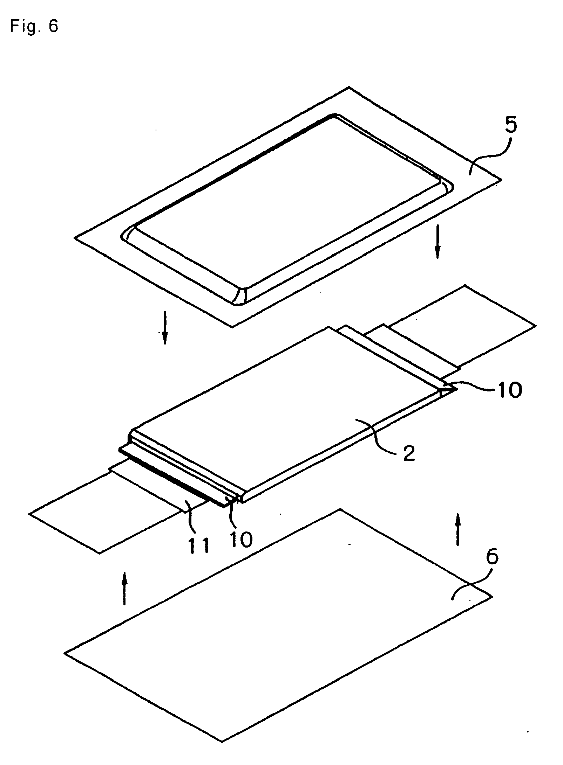

Figure 5 is a view showing a step of attaching the collector protection members to the anode collector and the cathode collector, and FIG. 6 is a view showing a step of attaching a laminate film to the battery element in which the collector protection members are attached to the anode collector and the cathode collector.

First, battery element 2 in which anode tab 4a is connected to anode collector 3a and cathode tab 4b is connected to cathode collector 3b, and laminate films 5, 6 are prepared. Incidentally, covering portions 11 are previously formed on anode tab 4a and cathode tab 4b.

Then, two collector protection members 11 are respectively inserted toward anode collector 3a and cathode collector 3b from anode tab 4a and cathode tab 4b (FIG. 5).

Each collector protection member 10 is inserted to a predetermined position of anode collector 3a or cathode collector 3b. At this time, collector protection member is not bonded to anode collector 3a or cathode collector 3b.

Then, battery element 2 provided with collector protection member 10 is put between laminate films 5, 6 (FIG. 6). Successively, three sides of heat-seal portions 7 of laminate films 5, 6 are heat-sealed and vacuumed, and then the remaining is heat-sealed to seal battery element 2.

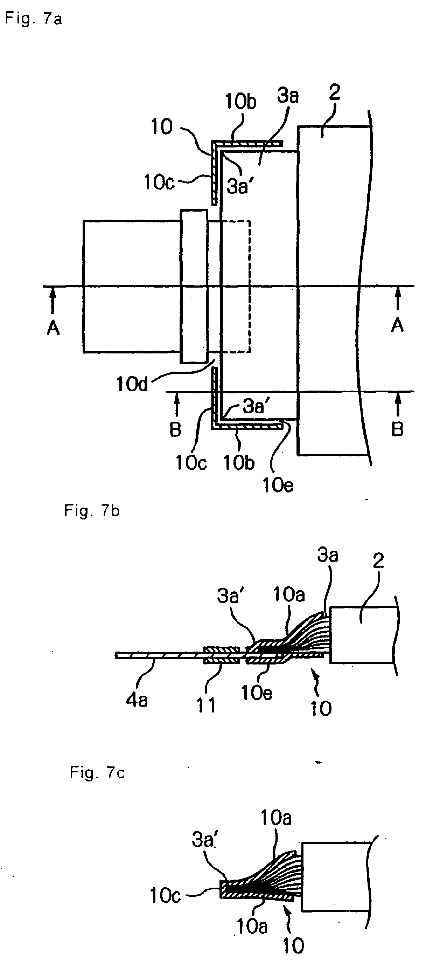

Figures 7a to 7c schematically show a plan view and side views of the vicinity of anode collector 3a to which collector protection member 10 is attached, as described above. Figure 7a is a plan view in which only collector protection member 10 is shown in cross section, FIG. 7b is a side cross-sectional view taken along line A-A in FIG. 7a, and FIG. 7c is a cross-sectional side view taken along line B-B in FIG. 7a. Incidentally, laminate films 5, 6 are omitted.

Corner 3a' of anode collector 3a is covered with flat portion 10a, side portion 10b, and front portion 10c of collector protection member 10, and corner 3a' directly abuts against laminate films 5, 6 so as not to cause damage to the heat-seal resin layers of laminate films 5, 6. Also, corner 3a' is positioned away from insertion hole 10d and insertion hole 10e, and therefore the current path from collector protection member 10 can be made longer.

Also, vacuuming is performed when battery element 2 is sealed by laminate films 5, 6, whereby collector protection member 10 is in strong contact with anode collector 3a. According to this arrangement, the inflow of the electrolytic solution between collector protection member 10 and anode collector 3a can be minimized, and therefore the electrical insulation property can be improved between corner 3a' and broken portion 5, which will be described later.

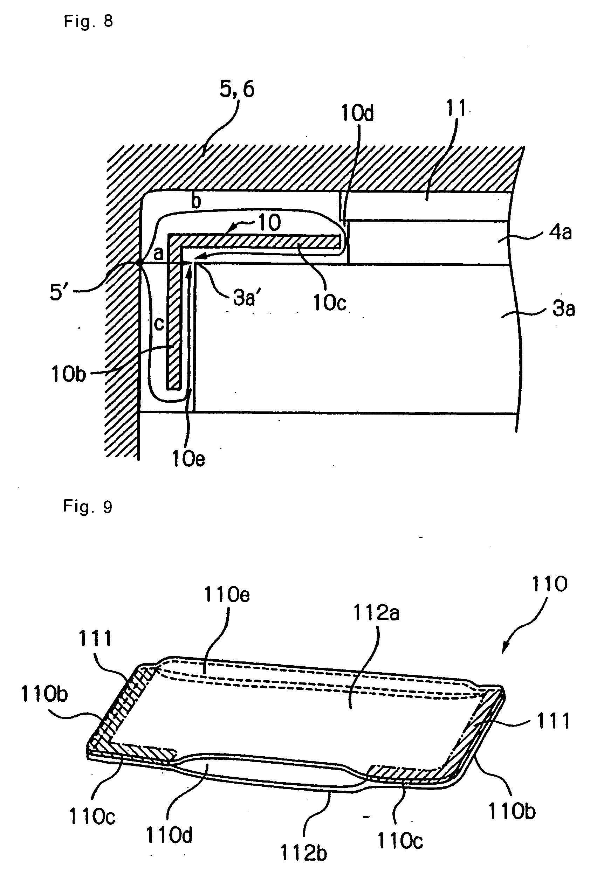

Now, explanations are given of the current path from the broken part to corner 3a' when laminate film 5 is broken. Incidentally, FIG. 8 shows that the area (broken part 5') corresponding to corner 3a' in laminate film 5, 6 is broken.

When corner 3a' is not covered with collector protection member 10, corner 3a' abuts against laminate film 5, 6, whereby the heat-seal resin layer of laminate film 5, 6 is damaged, the heat-seal resin layer at that area is thinned, and the insulation property is lowered. Specifically, broken part 5' is a starting point of insulation breakdown at laminate film 5, 6 side. Also, corner 3a' is a starting point of insulation breakdown at anode collector 3a side. So, the current path from broken part 5' to corner 3a' is the shortest path a, and the electrical insulation property is significantly reduced.

On the other hand, in the present embodiment, as shown in FIG. 8, corner 3a' is covered with side portion 10b and front portion 10c of collector protection member 10. Therefore, in the present embodiment, as described above, there is no case in which broken part 5' will be generated in the heat-sealing resin layer of laminate film 5, 6 by corner 3a'. However, even if broken part 5' is generated, the current path from broken part 5' to corner 3a' is path b through insertion hole 10d or path c through insertion hole 10e. As described above, both paths b, c are longer than path a, and it is possible to provide a state which makes it difficult for insulation breakdown to occur. Also, as described above, collector protection member 10 is made of a flexible material, and thus is in close strong contact with anode collector 3a by vacuuming. Accordingly, paths b, c have a very narrow cross section, and therefore a high electrical insulation property can be ensured.

As described above, collector protection member 10 according to the first embodiment ensures ease of attachment, and is arranged so that the current path to corner 3a' is set as long as possible and the electric resistance becomes larger.

Also, in collector protection member 10 according to the present embodiment, which only covers the collector, no consideration needs to be given to the resistance of the adhesive to the electrolytic solution and the problem that the electrical insulation property will be lowered because of the difference in adhesion during production will not occur, *i.e.,* by adhesion in such way that a lot of space remains between the tape and collector which is different from the arrangement in which the corner is covered with adhesive tape.

Incidentally, the present embodiment shows the example in a stereoscopic form with side portion 10b, however, there is no limitation on forms, and a film may be in a bag form that does not have side portion 106 in a flat form before being attached.

### (Second Embodiment)

Collector protection member 10 according to the first embodiment is formed with side portion 10b in a stereoscopic form before being attached and is previously provided with the bag form in which insertion hole 10d and insertion hole 10e are formed. Collection protection member 110 according to the present embodiment, as shown in FIG. 9, is formed by adhering two films 112a and 112b together.

Collection protection member 110 according to the present embodiment is formed by welding two films 112 at only parts of side portion 11 b and front portion 110c (welded portions 111 indicated by a hatch pattern in FIG. 9) so that insertion hole 110d and insertion hole 110e are formed. Collector protection member 110 is in a flat form before being attached.

The size of each portion is determined so as to attain the same proportion as collector protection member 10 according to the first embodiment, similar to collector protection member 10 according to the first embodiment. Welding margins of welded portion 111 are preferably set wider so that the current path can be set as long as possible.

### (Third Embodiment)

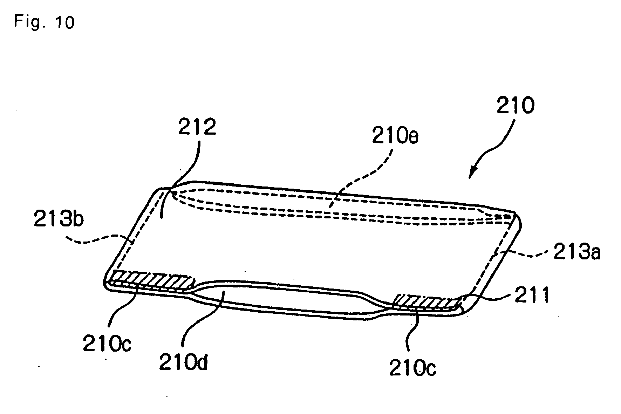

Collector protection member 110 according to the second embodiment is formed by adhering two films 112 together. Collection protection member 210 according to the present embodiment, as shown in FIG. 10, is made of inflation film 212, differently from the second embodiment.

Collection protection member 210 according to the present embodiment is formed by bending inflation film 212 at two bent portions 213a, 213b and by welding parts of front portion 210c (welded portions 211 indicated by a hatch pattern in FIG. 9) so that insertion hole 21 0d and insertion hole 210e are formed.

The size of each portion is determined so as to attain the same proportion as collector protection member 10 according to the first embodiment, similar to collector protection member 10 according to the first embodiment. Welding margins of welded portion 211 are preferably set wider so that the current path can be set as long as possible.

Incidentally, the values, the materials, and the like in each embodiment are taken as one example, and the present invention is not limited to those.

The representative embodiments are explained above, and each portion of the film covered battery is further explained below.

### (Lead terminal)

As a material for lead, Al, Cu, Ni, Ti, Fe, phosphor bronze, brass, stainless, or the like may be used, and annealing may be applied, if necessary. The thickness of the lead terminal is preferably 0.08 to 1.0 mm.

Also, preferably, a surface treatment for strengthening close contact with the enclosing material is applied to at least a portion of the lead terminal in contact with the enclosing material. As such a surface treatment, for example, the roughening process by the chemical etching process or the like, the corrosion-resistant film foundation process by a film including partial amino phenol polymer, phosphate compound, and titanium compound, a zinc phosphate film, or the like, and a surface treatment by a titanium coupling agent, an aluminate coupling agent may be mentioned.

Preferably, a resin film including metal adhesive resin is previously heat-sealed to the lead terminal. As the metal adhesive resin, resin that adheres to the surface of the lead terminal, which is a metal plate, is used, for example, acid denatured polypropylene, acid denatured polyethylene, acid denatured poly (ethylene-propylene) copolymer, and ionomer are available.

### (Enclosing Material)

There is no limitation on the enclosing material as long as it can cover the battery element so as to ensure that the electrolytic solution will not leak and is flexible, and a laminate film formed by laminating a metal layer and a heat-sealing resin layer is preferably used. As such a laminate film, for example, a laminate film formed by sticking the heat-seal resin having a thickness of 3 µm to 200 µm to metal foil having a thickness of 10 µm to 100 µm may be used. As a material for the metal foil, Al, Ti, Ti alloys, Fe, stainless, Mg alloys, and the like are available. As the heat-sealing resin, polypropylene, polyethylene, acid denatured resin thereof, polyester, like polyphenylene sulfide and polyethylene terephthalate, polyamide, ethylene-vinyl acetate copolymer, or the like may be used.

### (Battery Element)

There is no limitation on the anode plate, as long as positive ions are absorbed or negative ions are discharged during discharge, and any material known as an anode material for a secondary battery is available, such as (i) metal oxide, like LiMnO₂, LiMnO₂O₄, LiCoO₂, LiNiO₂, (ii) conductive polymer, like polyacetylene and polyaniline, (iii) disulfide compound indicated by general expression (R-Sm)n (R indicates fatty series or aromatic series, S indicates sulfur, m, n are integers of m ≧1, n ≧ 1) (dithioglycollate, 2, 5-dimercapto-1, 3, 4-thiadiazole, S-triazine-2, 4, 6-trithiol, or the like). Also, the anode active material may be mixed with the anode plate as a suitable binding agent or as a functional material. As the binding agent, halogen-containing polymer, like polyvinylidene-fluoride, may be used, and as the functional material, conductive polymer, like acetylene black, polypyrrole, and polyaniline, polyelectrolyte for ensuring ion conductivity, and the complex thereof may be used.

There is no limitation on the cathode plate, as long as cation can be occluded and can be discharged. Materials of related art known as the cathode active material for the secondary battery may be used, for example, natural graphite, crystalline carbon, like graphitized carbon obtained by heat treating coal-oil pitch, or the like, non-crystalline carbon obtained by heat treating coal-oil pitch coke, acetylene pitch coke, metallic lithium, lithium alloy, like AlLi.

As the electrolytic solution impregnated in the battery element, salt including cations of alkali metal, like Li K, Na and anions of compound including halogen, like ClO₄⁻, BF₄⁻, PF₆⁻, CF₃ SO₃⁻, (CF₃SO₂)₂N⁻, (C₂F₅SO₂)₂N⁻, (CF₃SO₂)₃C⁻, and (C₂F₅SO₂)₃C⁻, for example, may be dissolved in high polarity basic solvent that is available as the electrolyte solution for the secondary battery, such as ethylene carbonate, propylene carbonate, dimethyl carbonate, methylethyl carbonate, γ-butyrolactone, N,N'-dimethylformamide, dimethylsulfoxide, N-methylpyrrolidone, m-cresol. Also, a solvent including these basic solvents and an electrolyte salt may be used independently or may be combined and used. Also, gel electrolyte formed in a polymer gel containing the electrolytic solution is available. A slight amount of sulfolane, dioxane, dioxolan, 1, 3-propane sultone, tetrahydrofuran, vinylene carbonate may be added.

The above describes materials for the lithium ion secondary battery, however, the present invention may be applied to a lead battery, a nickel-cadmium battery, and a nickel hydride battery. Further, the present invention can be applied to an electric device, in which an electric device element, such as a capacitor element that is exemplified by a capacitor like an electric double layer capacitor, is sealed by the enclosing film.

## Claims

1. A film-covered device including an electric device element having a collector formed by collectively joining each anode plate or each cathode plate that is extended from a lamination area in which a plurality of anode plates and a plurality of cathode plates are opposite each other and laminated, and an enclosing film in which at least a heat-seal resin layer and a metal layer are laminated, a battery element that is surrounded in a manner such that said heat-sealing resin layer is inside, and a peripheral junction portion that is heat-sealed to seal said battery element and an electrolytic solution, comprising:
a member in the form of a bag for tightly covering at least a corner of said collector.

2. The film-covered electric device according to Claim 1, further comprising:
a tab that is connected to said collector and extends from said enclosing film;
wherein said member in the form of a bag is formed with an insertion hole for allowing said tab to be inserted thereinto.

3. The film-covered electric device according to Claim 1, wherein said member in the form of a bag is a resin-made film.

4. The film-covered electric device according to Claim 2, wherein said member in the form of a bag is formed by adhering two films together.

5. The film-covered electric device according to Claim 2, wherein said member in the form of a bag is made of an inflation film.

6. A collector-covering member for a film-covered electric device including an electric device element having a collector formed by collectively joining each anode plate or each cathode plate that is extended from a lamination area in which a plurality of anode plates and a plurality of cathode plates are opposite to each other and laminated, and an enclosing film in which at least a heat-seal resin layer and a metal layer are laminated, a battery element that is surrounded in a manner such that said heat-sealing resin layer is inside and a peripheral junction portion that is heat-sealed to seal said battery element and an electrolytic solution:
wherein collector covering member is said member in the form of a bag for tightly covering at least a corner of said collector.

7. The collector-covering member according to Claim 6, wherein an opening portion for allowing a tab that is connected to said collector and is extended from said enclosed film, is to be inserted thereinto.

8. The collector-covering member according to Claim 7 is a resin-made film.

9. The collector-covering member according to Claim 8 formed by adhering two films together.

10. The collector-covering member according to Claim 8 made of an inflation film.
